# EUROPÄISCHE PATENTSCHRIFT

(11) **EP 1 263 246 B1**
(45) Veröffentlichungstag und Bekanntmachung des Hinweises auf die Patenterteilung: **09.08.2006**
(21) Anmeldenummer: 02100449.4
(22) Anmeldetag: 06.05.2002
(51) Int. Cl.: H04Q 3/00

(54) **Verfahren zum automatischen Programmieren sowie zugehörige Komponenten**
Method for automatic programmation and corresponding components
Méthode pour la programmation automatique et les composants correspondants

(30) Priorität: 30.05.2001 DE 10126239
(43) Veröffentlichungstag der Anmeldung: 04.12.2002
(73) Patentinhaber: SIEMENS AKTIENGESELLSCHAFT, 80333 München (DE)
(72) Erfinder: Dittmann, Werner, 83544 Albaching (DE)

(56) Entgegenhaltungen:
- US-A- 5 381 548
- MILLER J A ET AL: "Component-based simulation environments: JSIM as a case study using Java Beans" SIMULATION CONFERENCE PROCEEDINGS, 1998. WINTER WASHINGTON, DC, USA 13-16 DEC. 1998, PISCATAWAY, NJ, USA,IEEE, US, 13. Dezember 1998 (1998-12-13), Seiten 373-381, XP010319703 ISBN: 0-7803-5133-9

## Beschreibung

Die Erfindung betrifft ein Verfahren, bei dem für ein Zielsystem mit verschiedenen Funktionseinheiten Modelleinheiten angegeben werden, welche jeweils die Signaleingänge und die Signalausgänge einer zu modellierenden Funktionseinheit nachbilden.

Beispielsweise werden solche Modelleinheiten beim Entwickeln von Diensten für sogenannte intelligente Netze eingesetzt. Die Modelleinheiten heißen in diesem Fall SIB-Einheiten (Service Independent Building Blocks). Intelligente Netze werden unter anderem in dem Buch "Technik der Netze", Gerd Siegmund, Hüthig Heidelberg, 4. Auflage, Seite 597 ff., erläutert. Bei dem Konzept des intelligenten Netzes (IN) werden bestimmte Leistungen eines Telekommunikationsnetzes, die über dem reinen Übermittlungsdienst und dessen ergänzende Dienstmerkmale hinausgehen, in "Intelligenten Netzknoten" konzentriert. Beispiele für IN-Dienste sind Dienste mit den Dienstkennzahlen 0800, 0900 oder 0130 usw. Die Dienstentwicklung wird im Kapitel 6.4.5 des Buches von Gerd Siegmund näher erläutert.

Grundsätzliche lassen sich folgende Phasen unterscheiden:
- Definieren des neuen Dienstes,
- Dienstablauf festlegen und testen,
- Ablaufwege-Softwareprogramme erzeugen, und
- Dokumentation des Dienstes.

Bei der Entwicklung neuer Dienste werden bereits bekannte und festgelegte SIB-Einheiten so weit wie möglich wieder verwendet.

Nach der Fertigstellung eines Dienstes kann der neu definierte Dienst aus dem Dienst-Definitionsprogramm heraus auch auch gleich in seinem logischen Ablauf mit einem entsprechenden Softwaremodul getestet werden. Nach einem positiven Ablauf wird dann der Programmcode generiert. Der Programmcode wird zusammen mit den zugehörigen Daten in einen SCP-Rechner (Service Control Point) bzw. einen SMP-Rechner (Service Management Point) geladen. SCP-Rechner und SMP-Rechner sind Bestandteile des intelligenten Telekommunikationsnetzes.

Der Programmcode wird bisher durch ein Softwaremodul erzeugt, das unabhängig von den Modelleinheiten ist. Weil jedoch die Dienst-Definitionsprogramme bisher speziell auf bestimmte Anwendungen zugeschnitten sind, wird ein separates Softwaremodul zum Kompilieren nicht als Nachteil angesehen. Bei Änderungen oder Ergänzungen muss nämlich das Dienst-Definitionsprogramm erheblich geändert werden, insbesondere müssen beispielsweise neue grafische Elemente festgelegt werden, die ein Editieren des Dienstes mit Hilfe eines Grafikprogramms ermöglichen. Die Änderungen im Kompilierprogramm sind im Vergleich zu den Änderungen am Dienst-Definitionsprogramm weniger aufwendig.

Außerdem gibt es andere Anwendungen, bei denen ähnlich vorgegangen wird:
- beim Programmieren von Steuerungssystemen, z.B. dem Steuerungssystem Siematic der Firma Siemens AG,
- beim Entwerfen und Optimieren von Programmablaufplänen, oder
- beim Entwurf elektrischer Schaltungen oder elektronischer Schaltungen mit marktüblichen CAD-Programmen (Computer Aided Design).

In dem Artikel "Component-Based Simulation Environments: JSIM as a Case Study using Java Beans", von John A. Miller et al, Proceedings of the 1998 Winter Simulation Conference, IEEE 1998-12-13, Seiten 373-381 wird eine sogenannte pseudo-real time Simulationsumgebung beschrieben. Modelleinheiten können beschrieben warden (in Java Bean Technik), ein Modell aus diesen Einheiten kann dynamisch zusammengesetzt warden. Verknüpfungen der Modelleinheiten dienen dazu, dass Quellen (Source) und Senken (Sink) entstehen, die die Datenflüsse simulieren. Die Editierung erfolgt in einer graphischen Bedienoberfläche.

Es ist Aufgabe der Erfindung, zum automatischen Programmieren ein einfaches Verfahren anzugeben, das insbesondere bei Ergänzungen oder Änderungen an einzelnen Modelleinheiten auf einfache Art und mit wenigen Programmierschritten angepasst werden kann. Außerdem sollen ein zugehöriges Programm, ein zugehöriger Datenträger und eine zugehörige Datenverarbeitungsanlage angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass für ein einfaches Editieren beim Angeben der Modelleinheiten Programmiervorgaben zu berücksichtigen sind, welche es der Editierfunktion ermöglichen, zur Laufzeit zu bestimmen, welche Signaleingänge und Signalausgänge eine Modelleinheit hat. Die Modelleinheiten sind also bezügliche des Editierens bereits voneinander getrennte Programmeinheiten. Werden den einzelnen Modelleinheiten die sie betreffenden Teile der Programmierfunktion, z.B. des Kompilierprogramms, zugeordnet, so wird das Verfahren zum automatischen Programmieren erheblich vereinfacht. Insbesondere sind Änderungen der Programmierfunktionen auf die zu ändernden Modelleinheiten beschränkt. Die Befehle zum Ausführen der Programmierfunktion sind den Modelleinheiten unmittelbar zugeordnet, so dass bei Änderungen Zuordnungsprozesse entfallen.

Deshalb enthalten beim erfindungsgemäßen Verfahren die Modelleinheiten jeweils eine eigene Programmierfunktion, die aufgrund der Einbettung der Modelleinheit in das Gesamtmodell Programmbefehle für die weitere Bearbeitung des Gesamtmodells (80) mit einem anderen Programm oder zur Steuerung eines die Funktionseinheiten (52) enthaltenden Zielsystems erzeugen. Das bloße Abspeichern des Gesamtmodells wird dabei nicht als Erzeugen von Programmierbefehlen für ein anderes Programm angesehen.

Ein Beispiel für ein Programmiermuster der Programmiersprache JAVA ist die Sprachbeschreibung für eine Methode zum empfangen einer Ereignisnachricht:
void <eventOccurenceMethodName> (<EventObjektType> evt);.

Das Einhalten des Programmiermusters gewährleistet ein fehlerfreies Auswerten einer nach dem Programmiermuster programmierten Quellcodezeile

Bei einer Weiterbildung des erfindungsgemäßen Verfahrens veranlasst eine Modelleinheit automatisch den Aufruf einer Programmierfunktion einer anderen Modelleinheit, deren Signaleingang dem Signalausgang der den Aufruf veranlassenden Modelleinheit zugeordnet worden ist. Die Modelleinheiten veranlassen den Aufruf von Programmierfunktionen so lange, bis alle Programmierfunktionen des Gesamtmodells aufgerufen sind. Bei dieser Weiterbildung der Erfindung wird von der Überlegung ausgegangen, dass die Programmiervorgaben, die zum Erbringen der Editierfunktion eingehalten werden müssen, auch einen einfachen Aufruf der Programmierfunktionen ermöglichen.

Bei einer nächsten Weiterbildung des erfindungsgemäßen Verfahrens bilden die Modelleinheiten Funktionen der zu modellierenden Funktionseinheit nach. Beim Angeben der Modelleinheiten werden Programmiervorgaben berücksichtigt, die es der Editierfunktion ermöglichen, zur Laufzeit zu bestimmen, welche Parameter zur Nachbildung der Funktion gewählt worden sind. Zum Nachbilden der Funktion müssen Ausgangssignale einer Funktionseinheit an eine nachgeschaltete Funktionseinheit weitergegeben werden. Dazu gibt es grundsätzlich zwei Möglichkeiten, nämlich das Aussenden und Bearbeiten von Ereignisnachrichten und der direkte Aufruf von Methoden einer anderen Modelleinheit. Bei einer Ausgestaltung gibt es auch eine Ereignisnachricht zum Aktivieren der Programmierfunktion, die an eine erste Modelleinheit gesendet wird. Beim Bearbeiten der Programmiernachricht wird die Programmierfunktion der ersten Modelleinheit ausgeführt. Anschließend werden Programmiernachrichten an die der ersten Modelleinheit nachgeschalteten Modelleinheiten gesendet und bewirken dort ebenfalls das Ausführen der jeweiligen Programmierfunktionen. Auf diese Art und Weise werden Programmiernachrichten durch das gesamte Modell weitergegeben. Am Ende ist das gesamte Modell kompiliert.

Bei einer anderen Weiterbildung des erfindungsgemäßen Verfahrens sind die Funktionseinheiten Bestandteil eines SCP-Rechners (Service Control Point) oder einer vermittlungstechnischen Einrichtung, z.B. Bestandteil einer Vermittlungsstelle. SCP-Rechner werden insbesondere zum Erbringen von Diensten in einem intelligenten Telekommunikationsnetz benötigt.

Bei einer nächsten Weiterbildung des erfindungsgemäßen Verfahrens werden durch die Programmiersprache JAVA vorgegebene Programmiermuster berücksichtigt. Jedoch lassen sich auch die Programmiermuster anderer Sprachen einsetzen, z.B. der Programmiersprache Perl. Insbesondere die Programmiersprache JAVA ist weit verbreitet. Grafische Funktionen zur Realisierung der Editierfunktion müssen nicht mehr durch jeden Hersteller von speziellen Anwendungen programmiert werden. Der Hersteller beschränkt sich nur noch auf die Modulierung seiner speziellen Funktionseinheiten sowie auf das Kompilieren.

Bei einer nächsten Weiterbildung sind die Modelleinheiten als sogenannte JAVA-Beans oder als sogenannte ActivX-Steuerelemente realisiert. JAVA-Beans sind wiederverwendbare Softwarekomponenten, die mit Hilfe eines grafischen Entwicklungswerkzeuges zu Gesamtmodellen verbindbar sind. Im Zusammenhang mit JAVA-Beans wird beispielsweise auf das Buch "Developing JAVA-Beans", Robert Englander, O'Reilly, Köln, 1997, verwiesen. Insbesondere durch das Anordnen von automatischen Programmierfunktionen in den einzelnen JAVA-Beans entsteht ein Verfahren, das den bisher verwendeten Verfahren zum automatischen Programmieren weit überlegen ist. Die Zuordnung der Programmierfunktionen zu einzelnen JAVA-Beans führt dazu, dass auch die Programmierfunktionen die Vorteile nutzen, die durch die starke Modularisierung entstehen, nämlich übersichtliche, wiederverwendbare und modulare Modelleinheiten, die auch einfach zu warten und zu pflegen sind.

Bei einer nächsten Weiterbildung des erfindungsgemäßen Verfahrens ermöglicht die Programmierfunktion eine Auswahl verschiedener Zielsysteme. Dazu wird der Programmierfunktion beispielsweise ein Auswahlparameter übergeben, der das Zielsystem festlegt. Abhängig vom Wert des Auswahlparameters wird dann beispielsweise Programmcode für eine Vermittlungsstelle des einen oder des anderen Typs erzeugt.

Bei einer Weiterbildung ist die automatische Programmierfunktion eine Kompilierfunktion, die aufgrund der Einbettung der Modelleinheit in das Gesamtmodell einen Teil eines für das Zielsystem spezifischen Programms zur Steuerung der durch die Modelleinheit nachgebildeten Funktionseinheit erzeugt. Kompilieren bedeutet dabei dass eine vollständige Übersetzung von Quellcode ausgeführt wird.

Bei einer alternativen Weiterbildung erzeugt die automatische Programmierfunktion Befehle für ein Simulationsprogramm, mit dem das Gesamtmodell nachfolgend bearbeitet wird.

Bei einer anderen Alternative erzeugt die automatische Programmierfunktion Befehle für ein Programm zur verbesserten grafischen Darstellung des Gesamtmodells im Vergleich zur Darstellung mit Hilfe der Editierfunktion. Ein Anwendungsbeispiel sind Programme zum Darstellen und Prüfen der Laufzeiten von Programmablaufplänen.

Die Erfindung betrifft außerdem ein Programm und einen Datenträger mit einem Programm. Das Programm enthält eine Befehlsfolge, bei deren Ausführung durch einen Prozessor das erfindungsgemäße Verfahren oder eine seiner Weiterbildungen durchgeführt wird. Das Programm ist bei einer Ausgestaltung eine JAVA-Bean. Der Datenträger ist eine nichtflüchtige Speichereinheit, z.B. eine Diskette, eine CD (compact disc) oder eine Festplatte, oder eine flüchtige Speichereinheit, z.B. ein RAM (random access memory). Außerdem wird eine Datenverarbeitungsanlage mit einem solchen Programm geschützt. Die Datenverarbeitungsanlage enthält einen Prozessor und eine Speichereinheit. Für das Programm, den Datenträger und die Datenverarbeitungsanlage gelten die oben genannten technischen Wirkungen ebenfalls.

Im Folgenden werden Ausführungsbeispiele der Erfindung an Hand der beiliegenden Figuren erläutert. Darin zeigen:
- Figur 1: zum automatischen Programmieren eines Zielsystems erforderliche Funktionseinheiten,
- Figur 2: ein Gesamtmodell, das durch die Verknüpfung einer Start-Modelleinheit und einer Zeitsteuerungs-Modelleinheit entstanden ist, und
- Figuren 3A und 3B: den JAVA-Quellcode der Zeitsteuerungs-Modelleinheit.

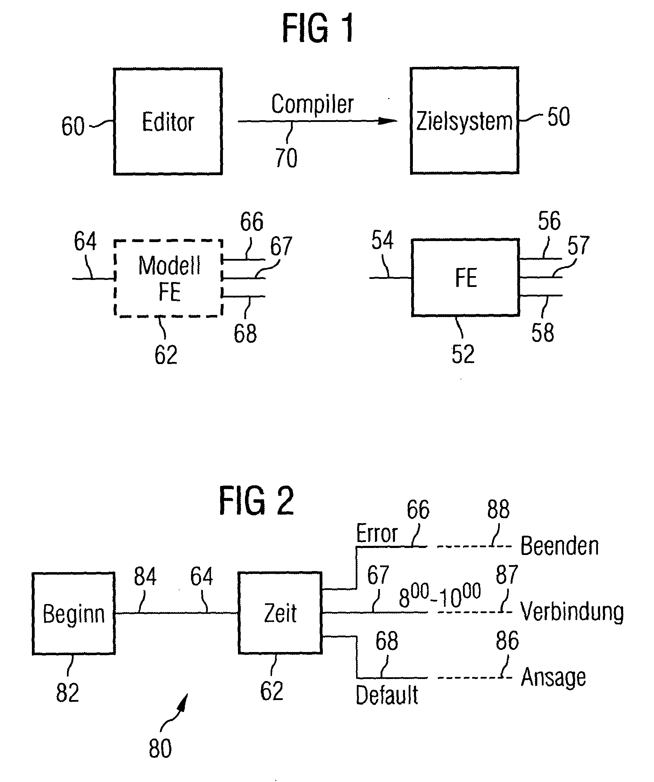

Figur 1 zeigt ein Zielsystem 50, z.B. einen SCP-Rechner (Service Control Point), der Bestandteil eines nicht dargestellten IN's (intelligent network) ist. Das Zielsystem 50 erbringt seine Funktionen mit Hilfe von Funktionseinheiten, von denen in Figur 1 eine Funktionseinheit 52 dargestellt ist. Die Funktionen der Funktionseinheiten werden mit Hilfe eines Programms oder mit Hilfe von elektronischen Schaltungen erbracht, die kein Programm enthalten. Die Funktionseinheit 52 ist beispielsweise eine Zeitsteuerungs-Funktionseinheit, die die Systemzeit ermittelt und mit vorgegebenen Zeitwerten vergleicht. Die Funktionseinheit 52 hat einen Signaleingang 54 und drei Signalausgänge 56, 57 und 58. Im Zielsystem 50 ist die Funktionseinheit 52 beispielsweise mit Hilfe eines Zeitsteuerschaltkreises oder mit Hilfe eines Softwareprogramms realisiert. Die genaue Funktion der Funktionseinheit 52 wird unten im Zusammenhang mit einer Modelleinheit 62 für die Funktionseinheit 52 erläutert.

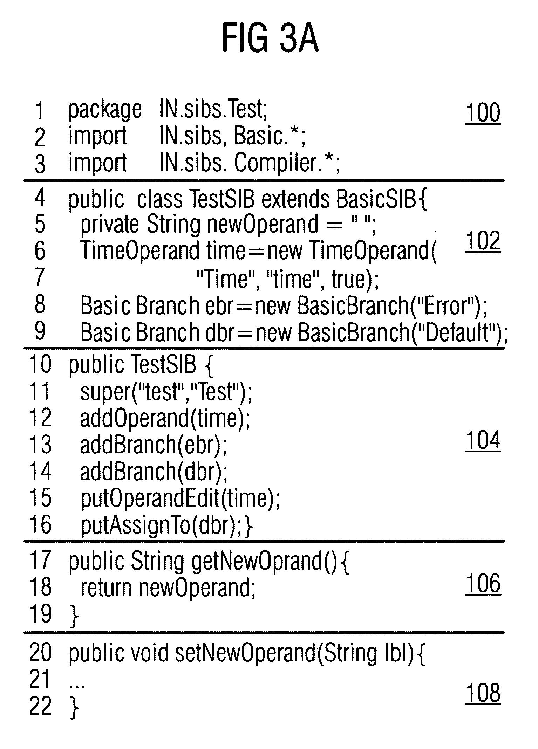

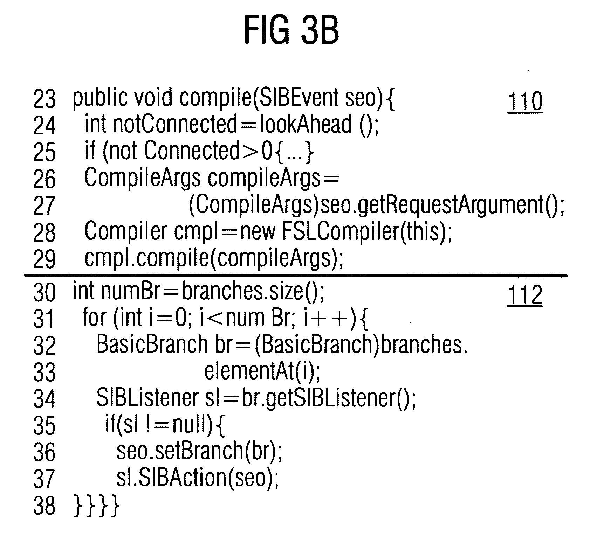

Mit Hilfe eines Editorprogramms 60 lassen sich Anwendungsprogramme für das Zielsystem 50 erstellen. Im Ausführungsbeispiel ist das Editorprogramm 60 ein grafischer Editor, mit dessen Hilfe Modelleinheiten verknüpft werden können, welche die Funktionseinheiten nachbilden. Eine Zeitsteuerungs-Modelleinheit 62 bildet beispielsweise die Funktionen der Zeitsteuerungs-Funktionseinheit 52 nach. Die Zeitsteuerungs-Modelleinheit 62 wird auf einem Bildschirm für eine Bedienperson als Rechteck dargestellt, an das eine Eingangslinie 64 zum Nachbilden des Signaleingangs 54 und drei Ausgangslinien 66 bis 68 zum Nachbilden der Signalausgänge 56 bis 58 grenzen. Mit Hilfe einer Computermaus lässt sich die Modelleinheit 62 auf dem Bildschirm platzieren und mit anderen Modelleinheiten zu einem Gesamtmodell einer Anwendung verknüpfen. Anschließend wird das Gesamtmodell getestet, wobei Funktionen der Modelleinheit aufgerufen werden, welche die Funktion der Funktionseinheit 52 simulieren. Abhängig von den Testergebnissen wird das Gesamtmodell gegebenenfalls geändert. Sind die Testergebnisse zufriedenstellend, so wird aus dem Gesamtmodell mit Hilfe einer Kompilierfunktion 70 ein Programm erzeugt, das durch einen Prozessor des Zielsystems 50 ausgeführt werden kann. Die Kompilierfunktion 70 wird unten an Hand der Figuren 3A und 3B näher erläutert.

Figur 2 zeigt einen Teil eines Gesamtmodells 80, das eine Start-Modelleinheit 82 und die Zeitsteuerungs-Modelleinheit 62 enthält. Die Start-Modelleinheit 82 hat eine Ausgangslinie 84, die zur Eingangslinie 64 der Zeitsteuerungs-Modelleinheit 62 führt. Kann die Systemzeit nicht ermittelt werden, so wird auf dem Signalausgang 56 bzw. im Gesamtmodell 80 auf der Ausgangslinie 66 ein Fehlersignal an eine nachfolgende Funktionseinheit 88 ausgegeben, die durch eine gestrichelte Linie dargestellt ist. Beispielsweise an eine Funktionseinheit, welche einen bei einem Teilnehmerendgerät eines Telekommunikationsnetzes ankommenden Anruf ablehnt.

Liegt die ermittelte Systemzeit zwischen beispielsweise 8 Uhr und 10 Uhr, so wird über die Ausgangsleitung 67 eine nachfolgende Modelleinheit 87 veranlasst, den ankommenden Ruf zu einem bestimmten anderen Endgerät weiterzuleiten. Liegt die ermittelte Systemzeit dagegen außerhalb der durch den Operanden vorgegebenen Zeit, d.h. im Beispiel vor 8 Uhr oder nach 10 Uhr, so wird über die Ausgangsleitung 68 eine Einheit 86 zum Einspielen einer Ansage angesteuert.

Die Figuren 3A und 3B zeigen den JAVA-Quellcode der Zeitsteuerungs-Modelleinheit 62. Am linken Rand sind die Nummern der Quellcodezeilen 1 bis 38 angegeben, die gleichzeitig Bezugszeichen sind.

Die Quellcodezeilen 1 bis 38 werden im Folgenden der Reihen nach ausführlich erläutert. Ein Semikolon am Zeilenende bedeutet, dass eine Programmanweisung beendet ist. Die Programmanweisungen sind in der Programmiersprache JAVA der Firma Sun Microsystems geschrieben.

Ein erster Programmabschnitt 100 enthält die folgenden Quellcodezeilen:
- 1: package IN.sibs.Test;
- 2: import IN.sibs.Basic.*;
- 3: import IN.sibs.Compiler.*;

In der Quellcodezeile 1 wird festgelegt, dass die in den Quellcodezeilen 1 bis 38 festgelegte JAVA-Bean-Einheit zu einem Paket mit dem Namen "IN.sibs.Test" gehört. Dabei ist "IN" die Abkürzung für "intelligentes Netz", und "sibs" ist die Abkürzung für "service independent building blocks".

In der Quellcodezeile 2 wird festgelegt, dass das Paket IN.sibs.Test alle Klassen enthält, die in Basis-Paketen festgelegt sind, die mit dem Namen "IN.sibs.Basic." beginnen. Das Zeichen "*" dient als Platzhalter. Die Basispakete enthalten beispielsweise folgende Klassen:
- BasicSIB zum Festlegen der Eigenschaft, die für alle Funktionsblöcke gleich sind, beispielsweise die Eigenschaft, dass jeder Ausgang eines Funktionsblockes mit nur einem nachfolgenden Funktionsblock verbunden werden darf.
- Klassen BasicBranch und BasicBoundedBranch, welche die Eigenschaften der Zweige zwischen den Funktionsblöcken beschreiben, z.B. die Namen der Zweige oder den Endpunkt eines Zweiges. "Bounded" bedeutet in diesem Zusammenhang, dass zusätzliche Zweige jeweils einem Operanden zugeordnet sind.
- BasicSIBOperand, welche die Basiseigenschaften eines Operanden für einen Funktionsblock definiert, z.B. dessen Namen.
- SIBEvent und SIBListener, welche die Art der Ereignisbehandlung zwischen den Funktionsblöcken festlegen. Diese beiden Klassen werden von üblichen JAVA-Bean-Entwicklungsumgebungen verwendet. Ähnliche Klassen werden bei allen JAVA-Bean-Anwendungen verwendet, vgl. beispielsweise das oben genannte Buch "Developing JAVA-Beans", Kapitel 2, "Events".
- BasicSIBEditor, SelectInfo und SelectInfoEditor, die Funktionen zur Verfügung stellen, die von der Entwicklungsumgebung zum Editieren der Bean-Eigenschaften verwendet werden. Diese Klassen werden nur dann benötigt, wenn Element-Beans mit ungewöhnlichen Eigenschaften festgelegt werden.
- BasicVJ, in der spezielle Hilfsfunktionen hinterlegt sind, die von dem marktüblichen Entwicklungswerkzeug "JAVA Studio" benötigt werden. Diese Klasse lässt sich von dem Entwicklungswerkzeug "JAVA Studio" auch automatisch aufgrund der für die Anwendung erstellten Bean-Strukturen erzeugen.

Auf die Eigenschaften der genannten Klassen wird beim Erläutern der Figuren 3A und 3B nur insoweit eingegangen, als diese Eigenschaften für das Verständnis des Ausführungsbeispiels erforderlich sind.

In der Quellcodezeile 3 wird festgelegt, dass zum Paket "IN.sibs.Test" alle Klassen gehören, die in einem Paket mit dem Namen "IN.sibs.Compiler" enthalten sind. Das Zeichen "*" dient wiederum als Platzhalter. Das Paket mit dem Namen "IN.sibs.Compiler" enthält Klassen, welche diejenigen Teile des Compilers realisieren, die unabhängig von den einzelnen Funktionsblöcken sind, beispielsweise Klassen zum Vorgeben von Compilerargumenten und Klassen zum Erfassen der Struktur einer JAVA-Bean. Die Eigenschaften der Compilerklassen werden an Hand der Figuren 3A und 3B nur insoweit erläutert, als sie für das Verständnis des Ausführungsbeispiels erforderlich sind.

Ein nachfolgender Programmabschnitt 102 enthält die folgenden Quellcodezeilen:
- 4: public class TestSIB extends BasicSIB{
- 5: private String newOperand = "";
- 6: TimeOperand time = new TimeOperand(
- 7: "Time", "time", true);
- 8: BasicBranch ebr = new BasicBranch("Error");
- 9: BasicBranch dbr = new BasicBranch("Default");

Durch die in der Quellcodezeile 4 angegebenen Anweisungen wird festgelegt, dass nachfolgend eine neue Klasse "TestSIB" festgelegt wird. Die Klasse "TestSIB" ist eine öffentliche Klasse, d.h. eine Klasse, die auch von anderen Klassen genutzt werden kann, siehe Anweisung "public". Die Klasse "TestSIB" erweitert die Klasse "BasicSIB", welche im Paket "IN.sibs.Basic" festgelegt ist, siehe Anweisung "extends".

Die Klasse BasicSIB enthält sogenannte Methoden, die zum Festlegen der Eigenschaften einer Modelleinheit erforderlich sind. Diese Methoden bzw. Funktionen werden erläutert, soweit sie für das Verständnis des Ausführungsbeispiels erforderlich sind.

In der Quellcodezeile 5 wird festgelegt, dass die Klasse "TestSIB" eine Zeichenkettenvariable mit dem Namen "newOperand" enthält. Die Variable "newOperand" wird zunächst mit einer leeren Zeichenkette "" belegt. Außerdem ist die Variable "newOperand" nur innerhalb der Klasse "TestSIB" verfügbar, siehe die Anweisung "private". Man spricht auch davon, dass die Variable "newOperand" gekapselt ist.

In den Quellcodezeilen 6 und 7 wird Speicherplatz für eine Variable "time" belegt, welche die Struktur hat, die in der Klasse "TimeOperand" festgelegt ist. Die Klasse "TimeOperand" geht ihrerseits auf die Basisklasse BasicSIBOperand zurück. Beim Erzeugen der Variablen "time" sind drei Parameter "Time", "time" und "true" anzugeben. "Time" bezeichnet den Namen des Ausgangs, der dem neuen Operanden zugeordnet wird. "time" ist die Angabe der Operandenart. "true" bedeutet, dass der Ausgang mit dem Eingang einer nachfolgenden Funktionseinheit bzw. Modelleinheit verbunden werden muss.

Die Quellcodezeile 8 enthält eine Anweisung zum Anlegen bzw. Erzeugen einer Zweigvariablen ebr (Error-Branch). Als Name für diesen Zweig wird der Name "Error" angegeben.

In der Quellcodezeile 9 wird eine Variable dbr (Default-Branch) erzeugt, die ebenfalls zum Realisieren einer Zweigstruktur dient. Als Name für diesen Zweig wird "Default" angegeben.

Implizit wird bei allen Modelleinheiten davon ausgegangen, dass sie mindestens einen Eingang besitzen. Die explizite Angabe eines Eingangszweiges ist also nicht erforderlich.

In einem Programmabschnitt 104 wird der sogenannte Konstruktor der Zeitsteuerungs-Modelleinheit 62 festgelegt. Die im Programmabschnitt 104 angegebenen Anweisungen werden ausgeführt, wenn die Modelleinheit 62 mit Hilfe des Editorprogramms und mit Hilfe einer Computermaus in einen Arbeitsbereich des Editierprogramms gezogen werden. Dieses Verfahren ist auch als Drag-and-Drop-Verfahren bekannt.

Der Programmabschnitt 104 enthält die folgenden QuellcodeZeilen:
- 10: public TestSIB{
- 11: super ("test", "Test");
- 12: addOperand (time) ;
- 13: addBranch(ebr);
- 14: addBranch(dbr);
- 15: putOperandEdit(time);
- 16: putAssignTo(dbr);}

Der Konstruktor der Klasse "TestSIB" ist öffentlich, siehe Schlüsselwort "public", und kann somit auch von anderen Klassen, insbesondere von den Klassen des Editors aus aufgerufen werden. Mit Hilfe der Anweisungen in der Quellcodezeile 11 wird der Konstruktor der übergeordneten Klasse aufgerufen, d.h. der Konstruktor der Klasse "BasicSIB". Als Argumente werden die beiden Parameter "test" und "Test" übergeben. "test" ist ein internes Kennzeichen. "Test" ist ein durch das Editierprogramm 60 angezeigtes Kennzeichen.

In der Quellcodezeile 12 wird die Methode "addOperand" aufgerufen, welche die Klasse "TestSIB" von der Klasse "BasicSIB" geerbt hat. Durch die Angabe des Parameters "time" wird erreicht, dass der Modelleinheit 62 ein Zeitoperand hinzugefügt wird. Beim Ausführen der Anweisung gemäß Quellcodezeile 12 wird der Modelleinheit 62 die Ausgangslinie 67 zugefügt.

Mit der Anweisung in der Quellcodezeile 13 wird eine Methode "addBranch" aufgerufen, welche die Klasse "TestSIB" von der Klasse "BasicSIB" geerbt hat. Als Parameter wird der Name "ebr" angegeben, der die in der Programmzeile 8 festgelegte Variable bezeichnet. Beim Ausführen der Anweisung gemäß Quellcodezeile 13 wird der Modelleinheit 62 die Ausgangslinie 66 zugefügt.

Mit Hilfe der Anweisung in der Quellcodezeile 14 wird die Methode "addBranch" nochmals aufgerufen, jedoch mit einem anderen Parameter, nämlich der Variablen dbr. Beim Ausführen der Anweisungen gemäß Quellcodezeile 14 wird der Modelleinheit 62 die Ausgangslinie 68 hinzugefügt.

Mit der Anweisung in der Quellcodezeile 15 wird erreicht, dass der Operand "time" mit Hilfe des Editorprogramms 60 editiert werden kann. So lässt sich beim Simulieren eine Zeitspanne vorgeben, in der dann eine bestimmte Aktion auszuführen ist.

Mit Hilfe der Anweisung "putAssignTo" in der Quellcodezeile 16 wird der der Variablen dbr zugeordnete Zweig, d.h. der Zweig mit dem Namen "Default" ausgewählt, so dass nach dem Anklicken des Zeichens für die Modelleinheit 62 dieser Zweig sofort bearbeitet werden kann. Eine nach links geöffnete geschweifte Klammer gibt in der Quelltextzeile 167 das Ende des Konstruktors an.

In Programmabschnitten 106 und 108 werden zwei Methoden festgelegt, die nur dann erforderlich sind, wenn die Modelleinheit eine variable Anzahl von Zweigen unterstützt. Die zusätzlichen Zweige sind immer mit einem Operanden verknüpft. Der Programmabschnitt 106 enthält die folgenden Quelltextzeilen:
- 17: public String getNewOperand () {
- 18: return newOperand;
- 19: }

Mit der Quellcodezeile 17 wird festgelegt, dass die Methode "getNewOperand" öffentlich ist und als Ergebnis eine Zeichenkettenvariable zurückgibt. Beim Aufruf der Methode "-getNewOperand" sind keine Parameter anzugeben. In der Quellcodezeile 18 ist angegeben, dass beim Aufruf der Methode "getNewOperand" als Argument der Wert der Variablen "newOperand" zurückgegeben wird. In der Quellcodezeile 19 wird durch eine nach links geöffnete geschweifte Klammer angegeben, dass die Definition der Methode "getNewOperand" abgeschlossen ist.

Ein Programmabschnitt 108 enthält die Anweisungen zum Festlegen einer Methode "setNewOperand", mit der sich ein neuer Operand zu der Modelleinheit 62 hinzufügen lässt.
- 20: public void setNewOperand(String lbl){
- 21: ...
- 22: }

Als Argument ist eine Zeichenkette zu übergeben, deren Wert einer Zeichenkettenvariable lbl (label) zugewiesen wird. In der Quellcodezeile 21 sind durch Punkte Anweisungen angedeutet, die beim Ausführen der Methode "setNewOperand" ausgeführt werden. Diese Anweisungen sind für das Verständnis des Ausführungsbeispiels nicht erforderlich und werden deshalb nicht näher erläutert. In der Quellcodezeile 22 wird durch eine nach links geöffnete geschweifte Klammer angegeben, dass die Definition der Methode "setNewOperand" beendet ist.

Ein Programmabschnitt 110 enthält Anweisungen, die zum Kompilieren ausgeführt werden:
- 23: public void compile(SIBEvent seo){
- 24: int notConnected = lookAhead();
- 25: if (notConnected > 0{...}
- 26: CompileArgs compileArgs =
- 27: (CompileArgs)seo.getRequestArgument();
- 28: Compiler cmpl = new FSLCompiler(this)
- 29: cmpl.compile(compileArgs);

Der Quellcodezeile 23 ist entnehmbar, dass die Methode "compile" der Modelleinheit 62 öffentlich ist, siehe Schlüsselwort "public", und keinen Parameter zurückgibt, siehe Schlüsselwort "void". Der Aufruf der Methode "compile" wird durch eine Ereignisnachricht an diese Methode veranlasst. Die Ereignisnachricht wird beim Aufruf in einer lokalen Variablen "seo" (sib event origin) gespeichert.

Mit Hilfe der Anweisungen in den Quellcodezeilen 24 und 25 wird überprüft, ob alle Ausgangszweige der Modelleinheit 62 mit nachfolgenden Modelleinheiten verbunden sind. Sind nicht alle Ausgangszweige der Modelleinheit 62 mit nachfolgenden Modelleinheiten verbunden, so wird auf einer Anzeigeeinheit eine Fehlermeldung ausgegeben, in der angegeben wird, wie viele Zweige nicht verbunden sind.

Mit Hilfe der Anweisungen in den Quellcodezeilen 26 und 27 werden Compilerargumente aus der Ereignisnachricht "seo" gelesen und der lokalen Variablen "compileArgs" zugewiesen.

Mit Hilfe der Anweisung in der Quellcodezeile 28 wird eine Variable mit dem Namen "cmpl" und vom Typ Compiler erzeugt. Als Compiler wird ein FSL-Compiler spezifiziert, d.h. ein Compiler für eine flexible Service-Logik, die in siemensspezifischen IN-Anwendungen verwendet wird. Als Argument wird "this" angegeben, d.h. der Quellcode der Modelleinheit 62.

Mit Hilfe der Anweisung in der Quellcodezeile 29 wird das Kompilieren der Modelleinheit 62 mit den zuvor extrahierten Compilerargumenten veranlasst. Der Compiler erfasst die Struktur der Modelleinheit 62 durch parsen und analysieren der Quellcodezeilen 1 bis 38. Insbesondere ist der Compiler in der Lage, an Hand der Quellcodezeilen 6 bis 9 die Anzahl der Ausgangszweige zu erfassen. Abhängig von dieser Struktur werden Befehle in der Programmiersprache FSL erzeugt, die durch das Zielsystem 10 direkt ausgeführt werden können. Die Datei, in welche diese Befehle zu schreiben sind, ist in den Compilerargumenten angegeben.

Das Ausführen der Methode compile der Modelleinheit 62 wird durch die Start-Modelleinheit 80 veranlasst. Die Start-Modelleinheit 80 sendet nämlich eine Kompiliernachricht an die Zeitsteuerungs-Modelleinheit 62. Beim Bearbeiten der Kompiliernachricht wird die Funktion compile ausgeführt.

Nach dem Kompilieren der Modelleinheit 62 veranlasst die Modelleinheit 62 das Senden von Kompiliernachrichten an die ihr nachfolgenden Modelleinheiten. Die dazu erforderlichen Anweisungen sind in einem Programmabschnitt 112 dargestellt. Der Programmabschnitt 112 enthält die folgenden Quellcodezeilen:
- 30: int numBr = branches.size();
- 31: for(Int i = 0; i < numBr; i++){
- 32: BasicBranch br = (BasicBranch)branches.elementAt(i);
- 34: SIBListener sl = br.getSIBListener();
- 35: If (sl != 0{
- 36: seo:setBranch(br);
- 37: sl.SIBAction(seo);
- 38: }}}}

Mit der Anweisung in der Quellcodezeile 30 wird ermittelt, wie viele Ausgangszweige die Modelleinheit 62 hat. Im Ausführungsbeispiel hat die Modelleinheit 62 drei Ausgangszweige 66 bis 68. Die Variable "numBr" wird also mit dem Wert 3 belegt.

In der Quellcodezeile 31 beginnt eine sogenannte Programmschleife, die auch als for-Schleife bezeichnet wird und mit deren Hilfe Kompiliernachrichten an die Modelleinheiten gesendet werden können, zu denen Ausgangszweige der Modelleinheit 62 führen. Für jeden Ausgangszweig werden die Anweisungen in den Quellcodezeilen 32 bis 37 ausgeführt.

Die Anweisung in der Quellcodezeile 32 bewirkt, dass einer lokalen Variable mit dem Namen "br" und vom Typ "BasicBranch" der aktuell zu bearbeitende Ausgangszweig zugeordnet wird. Mit der Anweisung in der Quellcodezeile 34 wird die nachfolgende Modelleinheit ermittelt, d.h. die Modelleinheit die Ereignisnachrichten empfängt, die über den betreffenden Ausgangszweig gesendet werden. Diese Modelleinheit wird einer Variablen sl (SIB Listener) zugeordnet.

Mit der Anweisung in der Quellcodezeile 35 wird geprüft, ob die Variable sl einen Wert hat, der von Null verschieden ist. Dies ist immer dann der Fall, wenn eine Modelleinheit ermittelt werden konnte, die mit dem gerade bearbeiteten Ausgangszweig der Modelleinheit 62 verbunden ist. Konnte eine solche Modelleinheit ermittelt werden, so werden die Quellcodezeilen 36 und 37 ausgeführt.

Mit der Anweisung in der Quellcodezeile 36 wird ein Verweis auf den gerade bearbeiteten Ausgangszweig der Modelleinheit 62 in der Kompiliernachricht vermerkt. Anschließend wird mit Hilfe der Anweisung 37 eine Kompiliernachricht an die Modelleinheit gesendet, die mit dem Ausgangszweig br verbunden ist.

In der Quellcodezeile 38 sind vier nach links geöffnete geschweifte Klammern angegeben, die in der Reihenfolge von links nach rechts der if-Anweisung in der Quellcodezeile 35, der for-Anweisung in der Quellcodezeile 31, der Methode compile und der Klasse "TestSIB" zugeordnet sind.

Die JAVA-Beans für andere Modelleinheiten bei anderen Ausführungsbeispielen sind auf ähnliche Art programmiert, wie die JAVA-Bean für die Klasse "TestSIB".

Die aktive Start-Modelleinheit 80 erzeugt im wesentlichen nur die Ereignisnachricht zum Beginnen der Kompilierung. Die Start-Modelleinheit 80 besteht nur aus der Klasse ButtonSIB. Diese Klasse sendet ein SIBEvent an die angeschlossene Modelleinheit. Diese Ereignisnachricht enthält Parameter, die den Aufruf der Ausgabemethode veranlasst, d.h. der Methode "compile"

In dem Paket "IN.sibs.Test" sind noch weitere Klassen definiert, die Hilfsfunktionen beim Test übernehmen, nämlich die Klassen:
- TimeOperand, welche beschreibt, wie ein Zeitoperand für eine Modelleinheit aussieht.
- EditTimeOperand, die Hilfsfunktionen zum Eingeben der Daten für den Zeitoperanden definiert.
- TestSIBBeanInfo sowie TestSIBEditor, die den Entwicklungswerkzeugen zusätzliche Informationen über die Schnittstellen der JAVA-Bean geben und die Editierfunktionen zur Verfügung stellen. Beide Klassen werden nur dann benötigt, wenn JAVA-Beans mit ungewöhnlichen Eigenschaften eingesetzt werden sollen.
- VJTestSIB, VJTestSIBCustomizer und VJTestSIBVJComponentInfo, welche spezielle Hilfsfunktionen enthalten, die von dem Entwicklungswerkzeug "JAVA Studio" benötigt werden. Diese drei Klassen können von "JAVA Studio" auch automatisch aufgrund der Bean-Strukturen erzeugt werden. Für andere Entwicklungswerkzeuge sind diese Klassen nicht erforderlich.
- VJButtonSIB und VJButtonSIBVJComponentInfos mit speziellen Hilfsfunktionen, die von dem Entwicklungswerkzeug "JAVA Studio" benötigt werden. Diese Klassen wurden von "JAVA Studio" automatisch aufgrund der Bean-Strukturen für die jeweilige Anwendung erzeugt. Für andere Entwicklungswerkzeuge sind diese Klassen nicht erforderlich

### Bezugszeichenliste

- 1: package IN.sibs.Test;
- 2: import IN.sibs.Basic.*;
- 3: import IN.sibs.Compiler.*;
- 4: public class TestSIB extends BasicSIB{
- 5: private String newOperand = " ";
- 6: TimeOperand time = new TimeOperand(
- 7: "Time","time",true);
- 8: BasicBranch ebr = new BasicBranch("Error");
- 9: BasicBranch dbr = new BasicBranch("Default");
- 10: public TestSIB{
- 11: super("test","Test");
- 12: addOperand(time);
- 13: addBranch(ebr);
- 14: addBranch(dbr);
- 15: putOperandEdit(time);
- 16: putAssignTo (dbr);}
- 17: public String getNewOperand(){
- 18: return newOperand;
- 19: }
- 20: public void setNewOperand(String lbl){
- 21: ...
- 22: }
- 23: public void compile(SIBEvent seo) {
- 24: int notConnected = lookAhead ();
- 25: if(notConnected > 0{...}
- 26: CompileArgs compileArgs =
- 27: (CompileArgs)seo.getRequestArgument();
- 28: Compiler cmpl = new FSLCompiler(this)
- 29: cmpl.compile(compileArgs);
- 30: int numBr = branches.size();
- 31: for(Int i = 0; i < numBr; i++){

- 32: BasicBranch br = (BasicBranch)branches.elementAt(i);
- 34: SIBListener sl = br.getSIBListener () ;
- 35: If(sl != 0{
- 36: seo.setBranch(br);
- 37: sl.SIBAction(seo);
- 38: }}}}
- 50: Zielsystem
- 52: Funktionseinheit
- 54: Signaleingang
- 56 bis 58: Signalausgang
- 60: Editorprogramm
- 62: Zeitsteuerungs-Modelleinheit
- 64: Eingangslinie
- 66 bis 68: Ausgangslinie
- 70: Kompilierfunktion
- 80: Gesamtmodell
- 82: Start-Modelleinheit
- 84: Ausgangslinie
- 86 bis 88: nachfolgende Funktionseinheiten
- 100 bis 112: Programmabschnitt

## Patentansprüche

1. Verfahren zum automatischen Programmieren (50) eines Steuerprogramms,
bei dem für ein Zielsystem (50) mit verschiedenen Funktionseinheiten (52) Modelleinheiten (62) angegeben werden, welche jeweils die Signaleingänge (54) und die Signalausgänge (56 bis 58) einer zu modellierenden Funktionseinheit (52) nachbilden,
bei dem Signaleingänge und Signalausgänge zum Aussenden oder Empfangen oder Bearbeiten von Ereignisnachrichten oder dem direkte Aufruf von Methoden einer anderen Modelleinheit dienen
bei dem beim Angeben der Modelleinheiten (62) Programmiervorgaben berücksichtigt werden, die es einer Editierfunktion (60) ermöglichen, zur Laufzeit zu bestimmen, welche Signaleingänge (64) und Signalausgänge (66 bis 68) eine Modelleinheit (62) hat,
bei dem die Modelleinheiten (62) mit Hilfe der Editierfunktion (60) durch Zuordnung von Signalausgängen (84) zu Signaleingängen (64) zu einem Gesamtmodell (80) verknüpft werden,
bei dem die Modelleinheiten (62) jeweils eine automatische Programmierfunktion (23 bis 29) enthalten, die aufgrund der Einbettung der Modelleinheit (62) in das Gesamtmodell (80) Programmbefehle für die weitere Bearbeitung des Gesamtmodells (80) mit einem anderen Programm oder zur Steuerung eines die Funktionseinheiten (52) enthaltenden Zielsystems erzeugen,
bei dem eine Modelleinheit (82) automatisch den Aufruf einer Programmierfunktion (23) einer anderen Modelleinheit (62) veranlasst, deren Signaleingang (64) dem Signalausgang (84) der den Aufruf veranlassenden Modelleinheit (82) zugeordnet worden ist,
und die Modelleinheiten (82, 62) den Aufruf von Programmierfunktionen (23) veranlassen, bis alle Programmierfunktionen aufgerufen worden sind.

2. Verfahren nach Anspruch 1,
**dadurch gekennzeichnet, dass**
die Modelleinheiten (82, 62) die Funktion der zu modellierenden Funktionseinheit (52) nachbilden,
und beim Angeben der Modelleinheiten (62) Programmiervorgaben berücksichtigt werden, die es der Editierfunktion (60) ermöglichen, zur Laufzeit zu bestimmen, welche Parameter zur Nachbildung der Funktion gewählt worden sind.

3. Verfahren nach einem der vorhergehenden Ansprüche,
**dadurch gekennzeichnet, dass**
die Funktionseinheiten (54) Bestandteile einer vermittlungstechnischen Einrichtung oder Bestandteile eines SCP-Rechners oder Bestandteile einer Vermittlungsstelle oder Bestandteile einer Telekommunikationsanlage sind.

4. Verfahren nach Anspruch 3,
**dadurch gekennzeichnet, dass**
durch die Funktionseinheiten (52) Funktionen des Dienstes "intelligentes Netzwerk" erbracht werden.

5. Verfahren nach einem der vorhergehenden Ansprüche,
**dadurch gekennzeichnet, dass**
durch die Programmiersprache JAVA vorgegebenen Programmiermuster berücksichtigt werden oder dass durch die Programmiersprache Active X vorgegebene Programmiermuster berücksichtigt werden.

6. Verfahren nach Anspruch 5,
**dadurch gekennzeichnet, dass**
die Modelleinheiten (62) als JAVA-Beans realisiert sind.

7. Verfahren nach einem der vorhergehenden Ansprüche,
**dadurch gekennzeichnet, dass**
die Programmierfunktion (23) eine Auswahl verschiedener Zielsysteme (50) ermöglicht.

8. Verfahren nach einem der vorhergehenden Ansprüche,
**dadurch gekennzeichnet, dass**
die automatische Programmierfunktion (23) eine Kompilierfunktion ist, die aufgrund der Einbettung der Modelleinheit (62) in das Gesamtmodell (80) einen Teil eines für das Zielsystem (50) spezifischen Programms zur Steuerung der durch die Modelleinheit nachgebildeten Funktionseinheit erzeugt.

9. Verfahren nach einem der vorhergehenden Ansprüche,
**dadurch gekennzeichnet, dass**
die automatische Programmierfunktion (23) Befehle für ein Simulationsprogramm erzeugt, mit dem das Gesamtmodell (80) nachfolgend bearbeitet wird.

10. Verfahren nach einem der vorhergehenden Ansprüche,
**dadurch gekennzeichnet, dass**
die automatische Programmierfunktion (23) Befehle für ein Programm zur verbesserten grafischen Darstellung des Gesamtmodells (80) im Vergleich zur Darstellung mit Hilfe der Editierfunktion (60) erzeugt.

11. Datenträger mit Programm,
**dadurch gekennzeichnet, dass**
das Programm eine Befehlsfolge enthält, bei deren Ausführung durch einen Prozessor ein Verfahren nach der vorhergehenden Ansprüche ausgeführt wird.

12. Datenverarbeitungsanlage, **gekennzeichnet durch** ein Programm nach Anspruch 11.

## Claims

1. Method for automatic programming (50) of a control program,
in which, for a target system (50) having various functional units (52), model units (62) which respectively simulate the signal inputs (54) and the signal outputs (56 to 58) of a functional unit (52) which is to be modelled are specified,
in which signal inputs and signal outputs are used for sending or receiving or processing event messages or for directly calling methods from another model unit,
in which, when the model units (62) are specified, programming stipulations are taken into account which allow an editing function (60) to determine, at the time of execution, the signal inputs (64) and signal outputs (66 to 68) which a model unit (62) has,
in which the model units (62) are linked to form an overall model (80) by associating signal outputs (84) with signal inputs (64) using the editing function (60),
in which the model units (62) respectively contain an automatic programming function (23 to 29) which, owing to the incorporation of the model unit (62) into the overall model (80), produces program commands for the continued processing of the overall model (80) with another program or for controlling a target system containing the functional units (52),
in which a model unit (82) automatically prompts the calling of a programming function (23) in another model unit (62), whose signal input (64) has been associated with the signal output (84) of the model unit (82) prompting the call,
and the model units (82, 62) prompt the calling of programming functions (23) until all the programming functions have been called.

2. Method according to Claim 1, **characterized in that** the model units (82, 62) simulate the functions of the functional unit (52) which is to be modelled,
and, when the model units (62) are specified, programming stipulations are taken into account which allow the editing function (60) to determine, at the time of execution, which parameters have been chosen for simulating the function.

3. Method according to one of the preceding claims, **characterized in that** the functional units (54) are parts of a call-processing facility or are parts of an SCP computer or are parts of an exchange or are parts of a telecommunications installation.

4. Method according to Claim 3, **characterized in that** the functional units (52) produce functions of the service "intelligent network".

5. Method according to one of the preceding claims, **characterized in that** programming patterns prescribed by the programming language JAVA are taken into account or **in that** programming patterns prescribed by the programming language ActivX are taken into account.

6. Method according to Claim 5, **characterized in that** the model units (62) are in the form of JAVA beans.

7. Method according to one of the preceding claims, **characterized in that** the programming function (23) allows different target systems (50) to be selected.

8. Method according to one of the preceding claims, **characterized in that** the automatic programming function (23) is a compiling function which, owing to the incorporation of the model unit (62) into the overall model (80), produces a portion of a program specific to the target system (50) for the purpose of controlling the functional unit simulated by the model unit.

9. Method according to one of the preceding claims, **characterized in that** the automatic programming function (23) produces commands for a simulation program used to process the overall model (80) subsequently.

10. Method according to one of the preceding claims, **characterized in that** the automatic programming function (23) produces commands for a program for the purpose of improved graphical display of the overall model (80) as compared with the display using the editing function (60).

11. Data medium with a program, **characterized in that** the program contains a command sequence which, when executed by a processor, carries out a method according to the preceding claims.

12. Data processing installation, **characterized by** a program according to Claim 11.

## Revendications

1. Méthode pour la programmation automatique (50) d'un programme de commande,
dans laquelle on désigne pour un système cible (50) comprenant différentes unités fonctionnelles (52) des unités modèles (62) qui reproduisent chacune les entrées du signal (54) et les sorties du signal (56 à 58) d'une unité fonctionnelle (52) à modéliser,
dans laquelle les entrées du signal et sorties du signal servent à l'émission ou à la réception ou au traitement de messages d'événements ou à l'appel direct de méthodes d'une autre unité modèle,
dans laquelle, au moment de désigner les unités modèles (62), des consignes de programmation sont prises en compte, qui permettent à une fonction d'édition (60) de déterminer pendant l'exécution quelles sont les entrées du signal (64) et sorties du signal (66 à 68) d'une unité modèle (62),
dans laquelle, à l'aide de la fonction d'édition (60) et en attribuant les sorties du signal (84) aux entrées du signal (64), les unités modèles (62) sont liées entre elles pour obtenir un modèle global (80),
dans laquelle les unités modèles (62) contiennent chacune une fonction de programmation automatique (23 à 29) qui en raison de l'intégration de l'unité modèle (62) dans le modèle global (80) génère des instructions de programme pour le traitement ultérieur du modèle global (80) avec un autre programme ou pour la commande d'un système cible contenant les unités fonctionnelles (52),
dans laquelle une unité modèle (82) provoque automatiquement l'appel d'une fonction de programmation (23) d'une autre unité modèle (62) dont l'entrée du signal (64) a été attribuée à la sortie du signal (84) de l'unité modèle (82) provoquant l'appel,
lesdites unités modèles (82, 62) provoquant l'appel de fonctions de programmation (23) jusqu'à ce que toutes les fonctions de programmation aient été appelées.

2. Méthode selon la revendication 1,
**caractérisée en ce que**
les unités modèles (82, 62) reproduisent la fonction de l'unité fonctionnelle (52) à modéliser et **en ce qu'**au moment de désigner les unités modèles (62), des consignes de programmation sont prises en compte, qui permettent à la fonction d'édition (60) de déterminer pendant l'exécution quels paramètres ont été choisis pour reproduire la fonction.

3. Méthode selon l'une des revendications précédentes,
**caractérisée en ce que**
les unités fonctionnelles (54) sont des éléments constitutifs d'un système de commutation ou des éléments constitutifs d'un calculateur SCP ou des éléments constitutifs d'un centre de commutation ou des éléments constitutifs d'une installation de télécommunications.

4. Méthode selon la revendication 3,
**caractérisée en ce que**
grâce aux unités fonctionnelles (52) des fonctions du service "réseau intelligent" sont réalisées.

5. Méthode selon l'une des revendications précédentes,
**caractérisée en ce que**
des modèles de programmation imposés par le langage de programmation JAVA sont pris en considération ou **en ce que** des modèles de programmation imposés par le langage de programmation Active X sont pris en considération.

6. Méthode selon la revendication 5,
**caractérisée en ce que**
les unités modèles (62) sont réalisées comme JAVA beans.

7. Méthode selon l'une des revendications précédentes,
**caractérisée en ce que**
la fonction de programmation (23) permet une sélection de différents systèmes cibles (50).

8. Méthode selon l'une des revendications précédentes,
**caractérisée en ce que**
la fonction de programmation automatique (23) est une fonction de compilation qui en raison de l'intégration de l'unité modèle (62) dans le modèle global (80) génère une partie d'un programme spécifique pour le système cible (50) en vue de la commande de l'unité fonctionnelle reproduite par ladite unité modèle.

9. Méthode selon l'une des revendications précédentes,
**caractérisée en ce que**
la fonction de programmation automatique (23) génère des instructions pour un programme de simulation avec lequel le modèle global (80) est traité par la suite.

10. Méthode selon l'une des revendications précédentes,
**caractérisée en ce que**
la fonction de programmation automatique (23) génère des instructions pour un programme permettant une représentation graphique améliorée du modèle global (80) par rapport à la représentation à l'aide de la fonction d'édition (60).

11. Support de données avec programme,
**caractérisé en ce que**
le programme contient une séquence d'instructions à l'exécution desquelles par un processeur une méthode selon les revendications précédentes est mise en oeuvre.

12. Equipement informatique de traitement de données, **caractérisé par** un programme selon la revendication 11.
